# EUROPÄISCHE PATENTSCHRIFT

(11) **EP 3 433 866 B1**
(45) Veröffentlichungstag und Bekanntmachung des Hinweises auf die Patenterteilung: **18.03.2020**
(21) Anmeldenummer: 17713595.1
(22) Anmeldetag: 14.03.2017
(51) Int. Cl.: H01H 1/0237

(54) **VERFAHREN ZUR HERSTELLUNG EINES KONTAKTWERKSTOFFES AUF BASIS VON SILBER-ZINNOXID ODER SILBER-ZINKOXID SOWIE KONTAKTWERKSTOFF**
METHOD FOR PRODUCING A CONTACT MATERIAL ON THE BASIS OF SILVER-TIN OXIDE OR SILVER-ZINC OXIDE, AND CONTACT MATERIAL
PROCÉDÉ DE FABRICATION D'UN MATÉRIAU DE CONTACT À BASE D'ARGENT-OXYDE D'ÉTAIN OU D'ARGENT-OXYDE DE ZINC, ET MATÉRIAU DE CONTACT

(30) Priorität: 23.03.2016 DE 102016105437
(43) Veröffentlichungstag der Anmeldung: 30.01.2019
(73) Patentinhaber: DODUCO Contacts and Refining GmbH, 75181 Pforzheim (DE)
(72) Erfinder: HONIG, Thomas, 75181 Pforzheim (DE); BEHRENS, Volker, 75015 Bretten (DE); CINAROGLU, Havva, 75446 Wiernsheim (DE)
(74) Vertreter: Twelmeier Mommer & Partner
(86) Internationale Anmeldenummer: PCT/EP2017/055997
(87) Internationale Veröffentlichungsnummer: WO 2017/162486

(56) Entgegenhaltungen:
- DE-A1- 19 828 692
- DE-C2- 4 331 526
- US-A- 5 846 288

## Beschreibung

Die Erfindung betrifft ein Verfahren zur Herstellung eines Kontaktwerkstoffes auf Basis von Silber-Zinnoxid oder Silber-Zinkoxid sowie einen entsprechenden Kontaktwerkstoff. Kontaktwerkstoffe auf Basis von Silber-Zinnoxid und Verfahren zu ihrer Herstellung sind beispielsweise aus der DE 43 31 526 C2 sowie der DE 198 28 692 A1 bekannt.

Elektrische Kontakte sind durch Lichtbögen, die sich beim Schalten bilden, erheblichen Belastungen ausgesetzt. Ein solcher Lichtbogen bewirkt, dass der Werkstoff des Kontakts lokal aufschmilzt und teilweise verdampft, was als Abbrand bezeichnet wird. Eine ständige Anforderung an Kontaktwerkstoffe ist es, diesen Belastungen möglichst gut Stand zu halten.

Kontaktwerkstoffe auf Basis von Silber-Zinnoxid haben in dieser Hinsicht an sich gute Eigenschaften, da die Silbermatrix für eine gute elektrische und thermische Leitfähigkeit sorgt, während die Zinnoxidpartikel den Abbrand reduzieren. Allerdings neigt Zinnoxid wegen seiner höheren thermischen Beständigkeit dazu, unter Lichtbogeneinwirkung schlecht leitende Schlackeschichten an der Kontaktoberfläche zu bilden, was zu einem unbefriedigenden Erwärmungsverhalten bei Dauerstrom führt. Diesem Nachteil lässt sich dadurch begegnen, dass dem Kontaktwerkstoff weitere Metalloxide zugemischt werden, beispielsweise Wolfram-, Molybdän-, Wismut-, Vanadium-, und/oder Kupferoxid. Diese Zusätze helfen, Zinnoxidpartikel zu benetzen, sodass dann, wenn die Oberfläche eines Kontaktstücks unter der Wirkung eines Schaltlichtbogens lokal aufschmilzt, das Zinnoxid feinteilig in Suspension bleibt.

Die ohnehin nicht ganz befriedigende plastische Verformbarkeit von Kontaktwerkstoffen aus Basis von Silberzinnoxid wird durch diese Zusätze jedoch noch verschlechtert, weil sie versprödend wirken. Die gilt insbesondere für Wismut- und Molybdänoxid.

Aufgabe der vorliegenden Erfindung ist es, einen Weg aufzuzeigen, wie ein Kontaktwerkstoff hergestellt werden kann, der gute mechanische Eigenschaften noch besser mit einem günstigen Erwärmungsverhalten und einer hohen Abbrandfestigkeit verbindet.

Diese Aufgabe wird durch ein Verfahren mit den im Anspruch 1 angegeben Merkmalen gelöst. Vorteilhafte Weiterbildungen der Erfindungen sind Gegenstand von Unteransprüchen.

Bei einem erfindungsgemäßen Verfahren wird Zinn- oder Zinkoxidpulver mit einem Pulver eines von Silber verschiedenen Metalls, das ein Element oder eine Legierung sein kann, vermischt, beispielsweise mit Wismutpulver. Diese Mischung wird dann über den Schmelzpunkt des Metallpulvers hinaus erhitzt, sodass die Zinn- oder Zinkoxidpartikel mit flüssigem Metall benetzt werden. Durch Einwirkung einer sauerstoffhaltigen Atmosphäre, beispielsweise Luft, wird dann das die Zinn- oder Zinkoxidpartikel benetzende Metall oxidiert. Dadurch entstehen Metalloxidpartikel, die sehr innig mit den Zinn- oder Zinkoxidpulverkörnern verbunden sind.

Die Zinn- oder Zinkoxidpartikel können durch Anwendung eines erfindungsgemäßen Verfahrens mit flüssigem Metall ummantelt werden. Wenn dieses Metall dann oxidiert wird, sind die Zinn- oder Zinkoxidpartikel von einem Metalloxid ummantelt und mit diesem hervorragend verbunden. Die Zinn- oder Zinkoxidpartikel und das Metalloxid bilden gegebenenfalls ein Verbundoxid. Allerdings muss die Menge des verwendeten Metalls nicht unbedingt so groß sein, dass alle Zinn- bzw. Zinkoxidpartikel vollständig ummantelt werden.

Die Menge des Metallpulvers kann klein gehalten werden, weil das aus dem Metallpulver nach dem Aufschmelzen gebildete Metalloxid sehr gut mit dem Zinn- bzw. Zinkoxid verbunden ist. Beispielsweise kann die Masse des Metalloxids weniger als ein Zehntel der Masse des Zinn- oder Zinkoxids betragen, etwa 2 bis 5 %.

Insbesondere wenn die Menge des Metallpulvers bezogen auf die Menge des Zinn- und Zinkoxidpulvers relativ klein ist, ist das durch Anwendung eines erfindungsgemäßen Verfahrens erzeugte Verbundoxid ohne weiteres als Pulver erhältlich bzw. lässt sich mit geringem Aufwand pulverisieren. Dieses Verbundoxidpulver wird dann in eine Silbermatrix eingebettet, beispielsweise indem das Verbundoxidpulver mit Silberpulver vermischt und dann das Pulvergemisch gesintert wird.

Die Silbermatrix kann dabei aus reinem Silber bestehen oder andere metallische Zusätze, beispielsweise Kupfer enthalten. Bevorzugt besteht die metallische Silbermatrix zu über 85 Gew. % aus Silber.

Das bei einem erfindungsgemäßen Verfahren zur Herstellung von Metalloxid verwendete Metallpulver kann beispielsweise Wismut-, Wolfram-, Molybdän-, und/oder Vanadiumpulver sein. Das erfindungsgemäß hergestellte Verbundoxidpulver kann mit weiteren Oxidpulvern vermischt werden.

Eine vorteilhafte Weiterbildung der Erfindung sieht vor, dass der Oxidationsschritt bei einer erhöhten Temperatur erfolgt, beispielsweise bei 600°C oder mehr, insbesondere bei 800°C oder mehr. Viele Metalle, wie beispielsweise Wismut, oxidieren bei Raumtemperatur nicht oder nur sehr langsam.

Eine weitere vorteilhafte Weiterbildung der Erfindung sieht vor, dass das durch den Oxidationsschritt gebildete Verbundoxid aus Zinn- bzw. Zinkoxid und Metalloxid bei einer erhöhten Temperatur angelassen wird, beispielsweise bei 1000°C oder mehr. Auf diese Weise kann lokal an der Grenze zwischen den Zinn- bzw. Zinkoxidpartikeln und den angrenzenden Metalloxidpartikeln ein Mischoxid entstehen und so der Verbund noch verbessert werden.

### Ausführungsbeispiel:

100 Gewichtseinheiten Zinnoxidpulver mit einer Partikelgröße von beispielsweise weniger als 7 µm nach FSSS (FSSS = Fisher Sub-Sieve Sizer) und 5 Gewichtseinheiten Wismutpulver werden vermischt. Diese Pulvermischung wird dann erhitzt, sodass flüssiges Wismut die Zinnoxidpartikel benetzt. Das Erhitzen kann unter Vakuum oder einer Intergasatmosphäre erfolgen. Anschließend wird die Mischung einer sauerstoffhaltigen Atmosphäre, beispielsweise Luft ausgesetzt und dort eine Stunde bei einer Temperatur von 1000°C oder mehr geglüht, damit das Wismut oxidiert. Nach Abschluss der Oxidation kann das erzeugte Verbundoxid noch einer Temperaturbehandlung unterzogen werden, beispielsweise für eine Stunde oder mehr bei 1100°C oder mehr geglüht werden.

Das so gebildete Oxidmaterial wird dann pulverisiert und mit Silberpulver vermischt. Das Silberpulver kann dann aufgeschmolzen und dadurch das Oxid in eine Silbermatrix eingebettet werden. Die Oxide können aber auch durch Sintern und/oder Strangpressen in die Silbermatrix eingebettet werden. Das erfindungsgemäß hergestellte Material ist im Vergleich zu herkömmlich hergestelltem Material besser verformbar und hat gleichwertige Schalteigenschaften.

## Patentansprüche

1. Verfahren zur Herstellung eines Kontaktwerkstoffes auf Basis von Silber-Zinnoxid oder Silber-Zinkoxid, **dadurch gekennzeichnet, dass** Zinn- oder Zinkoxidpartikel mit einem Pulver eines von Silber verschiedenen Metalls vermischt werden,
diese Mischung über den Schmelzpunkt des Metallpulvers hinaus erhitzt wird, so dass die Zinn- oder Zinkoxidpartikel mit flüssigem Metall benetzt werden,
die Mischung einer sauerstoffhaltigen Atmosphäre ausgesetzt und dadurch das Metall oxidiert wird, und danach
das durch den Oxidationsschritt gebildete Erzeugnis als Pulver in eine Silbermatrix eingebettet wird.

2. Verfahren nach Anspruch 1, **dadurch gekennzeichnet, dass** das Metallpulver als Hauptbestandteil Wismut enthält.

3. Verfahren nach Anspruch 1 oder 2, **dadurch gekennzeichnet, dass** der Oxidationsschritt bei einer erhöhten Temperatur, vorzugsweise von wenigstens 600 °C erfolgt.

4. Verfahren nach einem der vorstehenden Ansprüche, **dadurch gekennzeichnet, dass** das durch den Oxidationsschritt gebildete Erzeugnis einer Temperaturbehandlung bei einer erhöhten Temperatur, vorzugsweise wenigstens 1000 °C unterzogen wird.

5. Verfahren nach einem der vorstehenden Ansprüche, **dadurch gekennzeichnet, dass** das Einbetten in die Silbermatrix durch Vermischen mit Silberpulver und anschließendem Sintern des Silberpulvers erfolgt.

6. Kontaktwerkstoff hergestellt mit einem Verfahren nach einem der vorstehenden Ansprüche.

## Claims

1. A method for the production of a contact material based on silver tin oxide or silver zinc oxide, **characterized in that**
tin oxide or zinc oxide particles are mixed with a powder of a metal that differs from silver,
this mixture is heated beyond the melting point of the metal powder, so that the tin oxide or zinc oxide particles are wetted with liquid metal,
the mixture is exposed to an oxygen-containing atmosphere and the metal is thereby oxidized, and thereafter
the product formed by the oxidation step is embedded as a powder in a silver matrix.

2. The method as claimed in claim 1, **characterized in that** the metal powder contains bismuth as the main component.

3. The method as claimed in claim 1 or claim 2, **characterized in that** the oxidation step is carried out at a raised temperature, preferably of at least 600°C.

4. The method as claimed in one of the preceding claims, **characterized in that** the product formed by the oxidation step undergoes a heat treatment at a raised temperature, preferably of at least 1000°C.

5. The method as claimed in one of the preceding claims, **characterized in that** embedding into the silver matrix is carried out by mixing with silver powder and subsequently sintering the silver powder.

6. A contact material produced using the method as claimed in one of the preceding claims.

## Revendications

1. Procédé de fabrication d'un matériau de contact à base d'oxyde d'argent-étain ou d'oxyde d'argent-zinc, **caractérisé en ce que** l'on
mélange des particules d'oxyde d'étain ou de zinc avec une poudre d'un métal autre que l'argent,
chauffe ce mélange au-delà du point de fusion de la poudre de métal, faisant en sorte que les particules d'oxyde d'étain ou de zinc soient mouillées par du métal liquide,
expose ce mélange à une atmosphère contenant de l'oxygène pour ainsi oxyder le métal, et puis
incorpore le produit, tel que formé par l'étape d'oxydation, sous forme de poudre dans une matrice d'argent.

2. Procédé selon la revendication 1, **caractérisé en ce que** ledit poudre de métal contient, en tant que constituant principal, du bismuth.

3. Procédé selon les revendications 1 ou 2, **caractérisé en ce que** l'étape d'oxydation est réalisée à une température élevée, de préférence supérieure ou égale à 600 °C.

4. Procédé selon l'une des revendications précédentes, **caractérisé en ce que** le produit, tel que formé par l'étape d'oxydation, est soumis à un traitement thermique à une température élevée, de préférence supérieure ou égale à 1 000 °C.

5. Procédé selon l'une des revendications précédentes, **caractérisé en ce que** l'incorporation dans la matrice d'argent est réalisée par mélange avec de la poudre d'argent, puis frittage de la poudre d'argent.

6. Matériau de contact, fabriqué au moyen d'un procédé selon l'une des revendications précédentes.
